Europäisches Patentamt

European Patent Office

Office européen des brevets

(11) Veröffentlichungsnummer: **0 193 089**
B1

(12) **EUROPÄISCHE PATENTSCHRIFT**

(45) Veröffentlichungstag der Patentschrift:
06.09.89

(51) Int. Cl.⁴: **B 60 G 3/24,** B 60 G 7/00

(21) Anmeldenummer: 86102126.9

(22) Anmeldetag: 19.02.86

(54) Hinterradaufhängung für Kraftfahrzeuge, insbesondere für angetriebene Hinterräder.

(30) Priorität: 28.02.85 DE 3507081

(43) Veröffentlichungstag der Anmeldung:
03.09.86 Patentblatt 86/36

(45) Bekanntmachung des Hinweises auf die Patenterteilung:
06.09.89 Patentblatt 89/36

(84) Benannte Vertragsstaaten:
DE FR GB IT SE

(56) Entgegenhaltungen:
DE-A- 2 038 880

(73) Patentinhaber: Bayerische Motoren Werke
Aktiengesellschaft, Patentabteilung
AJ-3 Postfach 40 02 40 Petuelring 130,
D-8000 München 40 (DE)

(72) Erfinder: Matschinsky, Wolfgang, Korbinianstrasse 9,
D-8000 München 40 (DE)
Erfinder: Sautter, Wolfgang, Riesheimer Strasse 24,
D-8032 Gräfelfing (DE)
Erfinder: Strasser, Ludwig, Ulrichstrasse 4a,
D-8017 Ebersberg (DE)
Erfinder: Müller, Rudolf, Thomas-Schwarz-Strasse 43,
D-8060 Dachau (DE)

(74) Vertreter: Dexheimer, Rolf, Bayerische Motoren Werke
Aktiengesellschaft Postfach 40 02 40 Petuelring 130 -
AJ-31, D-8000 München 40 (DE)

## Beschreibung

Die Erfindung bezieht sich auf eine Hinterradaufhängung für Kraftfahrzeuge, insbesondere für angetriebene Hinterräder, wie sie im Oberbegriff des Patentanspruchs 1 beschrieben und beispielsweise durch die DE-A 2 038 880 bekannt ist.

Bei der Hinterradaufhängung nach der genannten Offenlegungsschrift ist der Längsarm starr mit dem eigentlichen Radträger verbunden und sein vorderer Lagerpunkt bestimmt wesentlich den «Längspol» der Radaufhängung mit. Soll die Achse Anfahr-Nickausgleich besitzen, muss dieser Lagerpunkt höher angeordnet werden als die Radmitte, womit er bei Personenwagen in Raumkonflikt mit der hinteren Sitzbank gerät. Durch den knappen Bauraum wird auch die Länge des Längsarms begrenzt, was zu starken Winkeländerungen des Radträgers in Seitenansicht im Verlauf der Federungsbewegung führt. In der Regel müssen bei derartigen Radaufhängungen starke Sturzänderungen über dem Federweg in Kauf genommen werden, um andererseits über dem Federweg eine geringe Vorspuränderung zu erhalten.

Aus der nicht vorveröffentlichten älteren Patentanmeldung DE-A 3 331 247 ist eine Radaufhängung etwas anderer Gattung bekannt, mit der der reale Anlenkpunkt des Längsarms verhältnismässig nieder – ggf. sogar unterhalb der Radachse – vorgesehen werden kann, wobei trotzdem das Rad bei der Federungsbewegung um einen merklich höheren und auch weiter vor dem realen Anlenkpunkt liegenden ideellen Momentanpol schwenkt. Bei dieser Radaufhängung ist ferner der Längsarm gelenkig mit dem Radträger verbunden.

Mit der vorliegenden Erfindung soll die Aufgabe gelöst werden, mit mässigem Bauaufwand einen Brems- und Anfahr-Nickausgleich bei beliebig wählbarer Sturzänderung und Vorspurkurve über dem Federweg zu schaffen, wobei die elastokinematische Abstimmung auch ohne Verwendung eines elastisch aufgehängten Hilfsrahmens gut beherrschbar sein soll.

Diese Aufgabe wird erfindungsgemäss durch die Merkmale des Patentanspruchs 1 gelöst.

Bei der Federungsbewegung wird dem gegenüber dem Längsarm schwenkbaren Radträger ausser seiner Schwenkbewegung um den realen vorderen Lagerpunkt des Längsarms eine weitere Schwenkbewegung um seine Gelenkverbindung mit dem Längsarm aufgezwungen. Dies wird dadurch möglich, dass der Längsarm den mit dem Verbindungslager versehenen Querlenker und damit auch dessen radträgerseitiges Gelenk zwangsläufig mitbewegt. Mit der dadurch bewirkten zusätzlichen zwangsläufigen Verschwenkung des Radträgers lässt sich erreichen, dass sich das Rad ähnlich wie bei der schon erwähnten nicht vorveröffentlichten Patentanmeldung beim Einfedern um einen ideellen Momentanpol bewegt, der deutlich höher und deutlich vor dem realen Lagerpunkt liegt, mit dem der Längsarm am Fahrzeugaufbau oder dergleichen angelenkt ist.

Die Erfindung und weitere vorteilhafte Einzelheiten der Erfindung, die auch Gegenstand von Unteransprüchen sind, sind im folgenden anhand mehrerer in der Zeichnung dargestellter Ausführungsbeispiele näher erläutert. Es zeigen

Fig. 1 eine perspektivische Schemadarstellung eines ersten Ausführungsbeispiels;

Fig. 2 eine der Darstellung nach Fig. 1 entsprechende Darstellung eines weiteren Ausführungsbeispiels;

Fig. 3, 4 und 5 die Rückansicht, Draufsicht und Seitenansicht der in Fig. 1 dargestellten Radaufhängung;

Fig. 6 eine vergrösserte Darstellung des Längsarms der Radaufhängung nach Fig. 5;

Fig. 7 eine vergrösserte Darstellung des Ausschnitts A aus Fig. 6;

Fig. 8 die Seitenansicht einer teils schematischen Darstellung des Ausführungsbeispiels nach Fig. 1, jedoch mit einem Hilfsrahmen;

Fig. 9 eine Draufsicht auf das Ausführungsbeispiel nach Fig. 8;

Fig. 10 eine etwa der Fig. 4 entsprechende Draufsicht eines weiteren Ausführungsbeispiels;

Fig. 11 einen Schnitt nach der Linie XI-XI in Fig. 10;

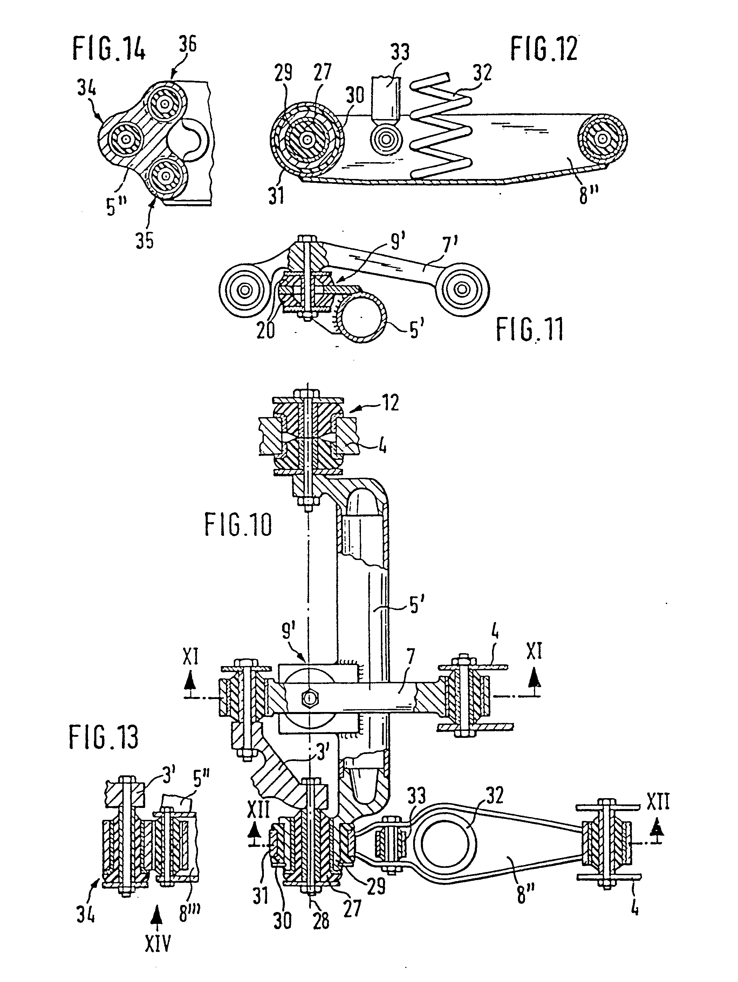

Fi. 12 einen Schnitt nach der Linie XII-XII in Fig. 10;

Fig. 13 einen der Fig. 10 entsprechenden Teilschnitt einer weiteren Variante;

Fig. 14 eine Ansicht in Richtung des Pfeiles XIV-XIV in Fig. 13;

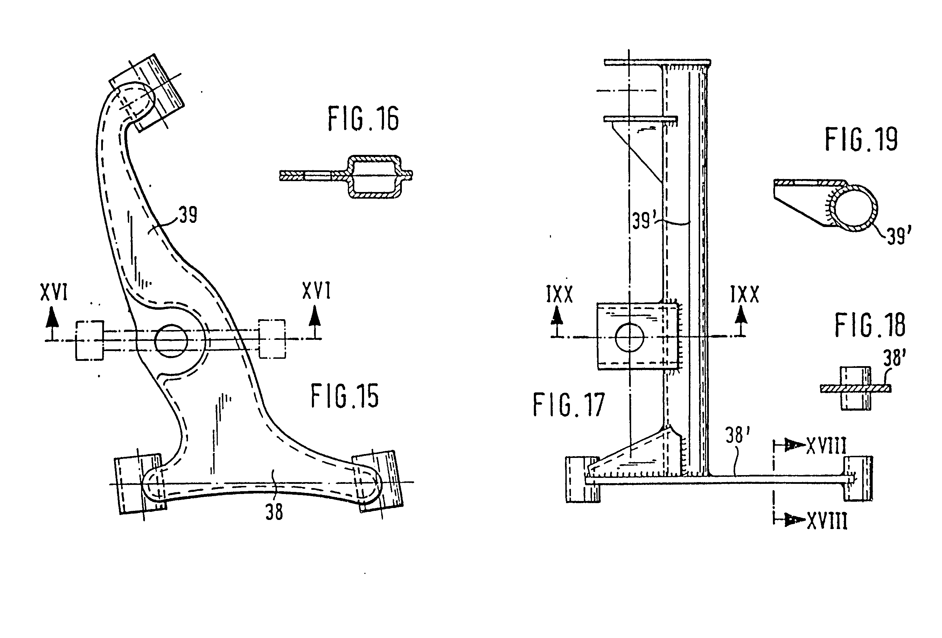

Fig. 15 die Draufsicht auf den Längsarm-Querlenkerverbund einer weiteren Ausführungsform;

Fig. 16 einen Schnitt nach der Linie XVI-XVI in Fig. 15;

Fig. 17 eine der Fig. 15 entsprechende Draufsicht auf ein weiteres Ausführungsbeispiel;

Fig. 18 und 19 Schnitte nach den Linien XVIII-XVIII und XIX-XIX der Fig. 17;

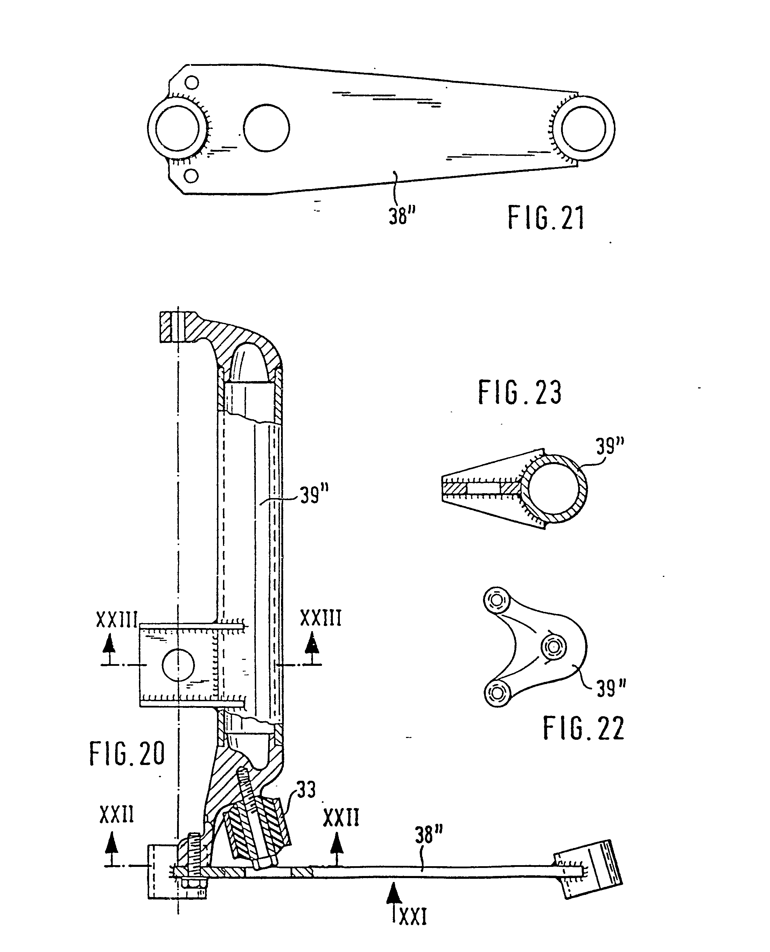

Fig. 20 eine der Fig. 17 entsprechende Draufsicht eines weiteren Ausführungsbeispiels;

Fig. 21, 22 und 23 eine Ansicht in Richtung des Pfeiles XXI bzw. Schnitte nach den Linien XXII-XXII und XXIII-XXIII in Fig. 20;

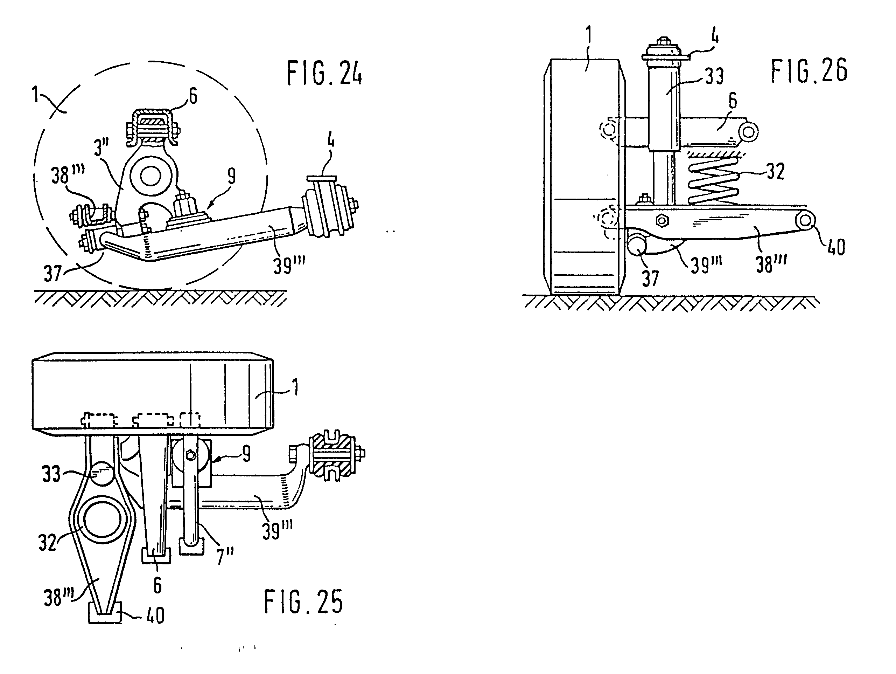

Fig. 24, 25 und 26 die Seitenansicht, Draufsicht und Rückansicht einer weiteren Ausführungsform der neuen Radaufhängung und

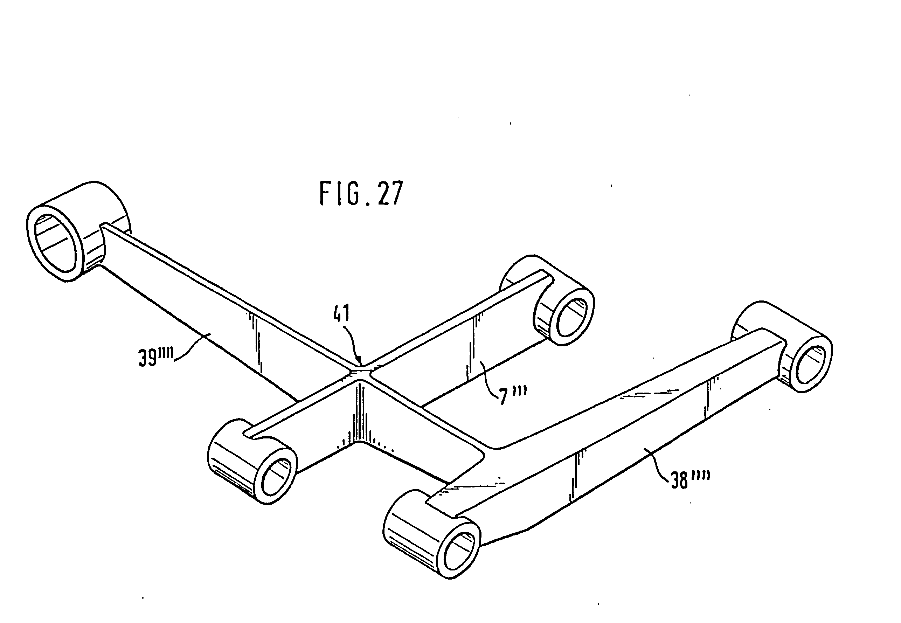

Fig. 27 eine perspektivische Ansicht auf einen Verbund Längsarm/untere Querlenker nach einem weiteren Ausführungsbeispiel.

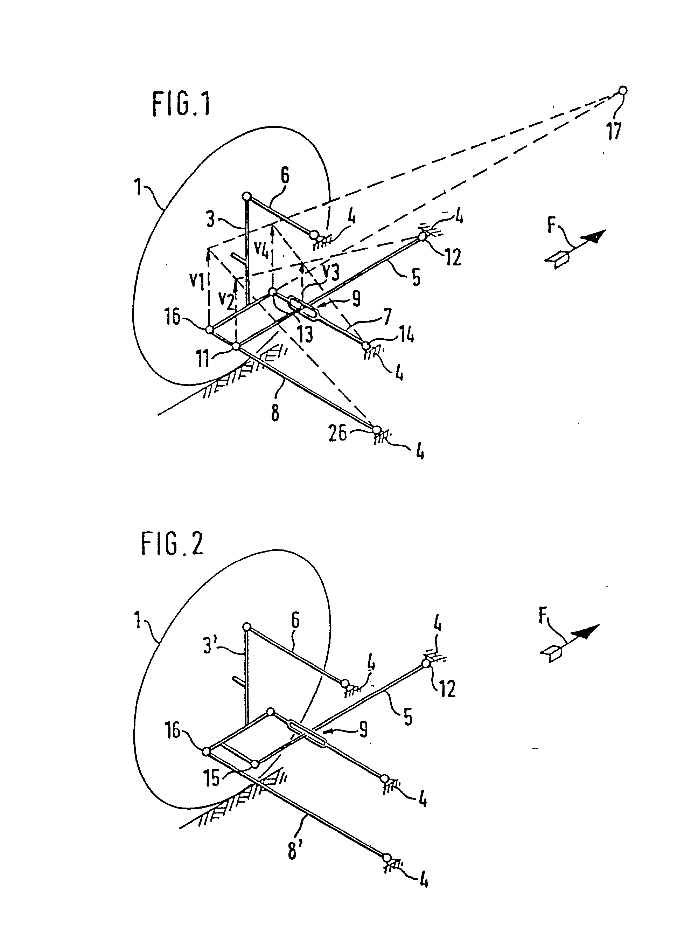

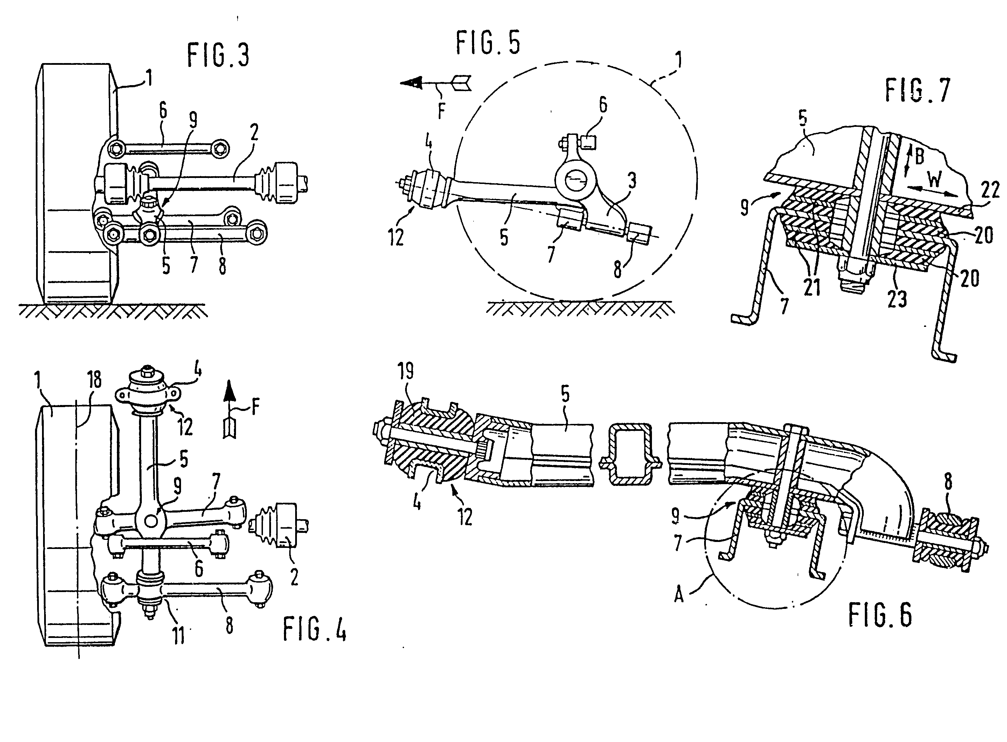

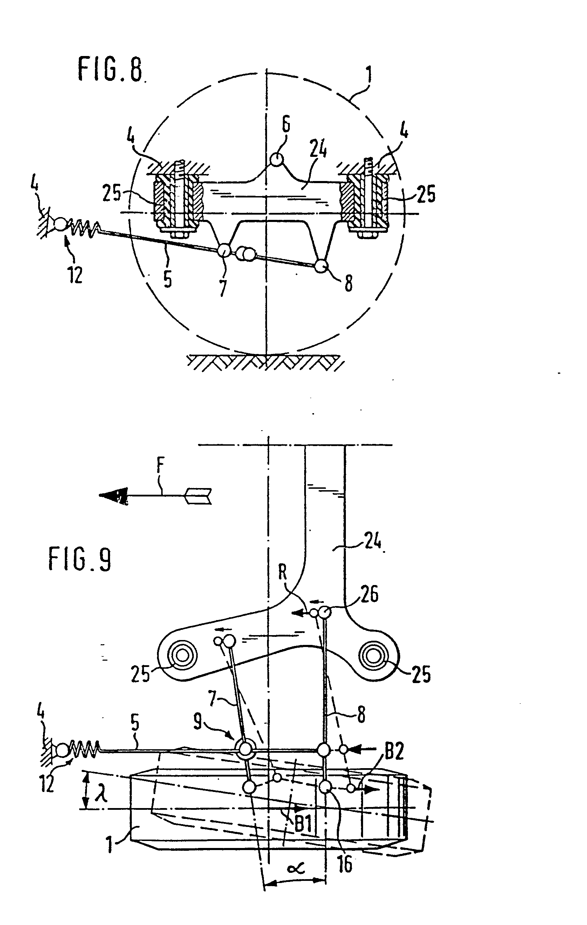

Die Schemazeichnung nach Fig. 1 ist den etwas realitätsnäheren Darstellungen nach den Fig. 3 bis 7 zugeordnet. Die in den genannten Figuren wiedergegebene Hinterachsaufhängung dient bei dem dargestellten Ausführungsbeispiel für die angetriebenen hinteren Räder 1, weshalb in Fig. 3 und 4 auch eine Antriebswelle 2 dargestellt bzw. angedeutet ist. Der das Rad 1 lagernde Radträger 3 ist mit dem lediglich angedeuteten Fahrzeugaufbau 4 über einen in Fahrzeuglängsrichtung verlaufenden Längsarm 5 verbunden. Der Längsarm 5 weist bei den dargestellten Ausführungsbeispielen vom Radträger 3 in Fahrtrichtung F nach vorne. An dem Radträger 3 greift als oberes Radführungsglied ein oberer Querlenker 6 an, während als untere Radführungsglieder ferner ein vorderer unterer Querlenker 7 und ein hinterer unterer Querlenker 8 vorgesehen sind. Die Querlenker 6, 7, 8 sind mit ihren inneren Enden gelenkig am Fahrzeugaufbau 4 angelenkt. Sie können aber auch, wie später anhand der Fig. 8 und 9 noch kurz dargestellt werden wird, an einem Hilfsrahmen angelenkt sein.

Anstelle des oberen Querlenkers 6 könnte als oberes Radführungsglied auch ein Federbein Verwendung finden, das mit einem ecksteifen Drehgelenk mit im wesentlichen querverlaufender Drehachse am Radträger angelenkt sein müsste.

Bei dem Ausführungsbeispiel nach Fig. 1 und den Fig. 3 bis 5 ist der Längsarm 5 mittelbar gelenkig mit dem Radträger 3 verbunden, denn er ist mit seinem hinteren Ende an dem hinteren unteren Querlenker 8 angelenkt, dessen äusseres Ende wiederum gelenkig an dem Radträger 3 angreift. Bei den in der Zeichnung dargestellten bevorzugten Ausführungsbeispielen ist der Längsarm 5 mit dem vorderen Lenker 7 der beiden unteren Lenker 7, 8 zwischen den beiden Enden des vorderen Lenkers 7 über ein Verbindungslager 9 abgestützt, das diesen vorderen unteren Lenker 7 mit dem Längsarm 5 etwa in vertikaler Richtung koppelt, also keine nennenswerten vertikalen Relativbewegungen des Längsarms 5 in bezug zum Querlenker 7 in dem Bereich zulässt. In dem sich diese kreuzen. Horizontale Relativbewegungen zwischen dem vorderen unteren Lenker 7 und dem Längsarm 5 lässt das Verbindungslager 9 dagegen zu. Sind der Längsarm 5 und der vordere untere Querlenker 7 – wie bei dem Prinzipbild nach Fig. 1 angenommen in einer Ebene gelegen, so würde dies beispielsweise bei einer solchen konstruktiven Auslegung bedeuten, dass die Verbindungslinie der Gelenke 11 und 12 an den Enden des Längsarms 5 und die Verbindungslinie der Gelenke 13 und 14 an den Enden des Querlenkers 7 stets in einer gemeinsamen Ebene bleiben, dass aber Relativbewegungen zwischen Längsarm 5 und Querlenker 7 in dieser Ebene in jeder Richtung möglich sind.

In den Fig. 1 und 2 ist ein derartiges Verbindungslager 9 durch einen Schlitz im unteren Querlenker 7 symbolisiert, durch den der Längsarm 5 hindurchgeführt ist. Der Längsarm 5 soll sich dabei längs des Schlitzes, aber auch senkrecht zur Längsstreckung des Schlitzes – etwa in horizontaler Richtung – bewegen können. In annähernd vertikaler Richtung (Geschwindigkeitspfeil $v_3$) sind der Längsarm 5 und der Querlenker 7 dagegen gefesselt, d. h. der sich vertikal bewegende Längsarm 5 nimmt in dieser Richtung den Querlenker 7 mit bzw. umgekehrt.

Die Ausführungsform nach Fig. 2 unterscheidet sich von der Ausführungsform nach Fig. 1 dadurch, dass der Längsarm 5 unmittelbar am Radträger 3' über das Gelenk 15 – angelenkt ist. Die im folgenden anhand der Fig. 1 erläuterte Wirkungsweise der neuen Hinterradaufhängung gilt jedoch im Prinzip auch für die Ausführungsform nach Fig. 2.

In Fig. 1 ist angenommen, dass die äusseren Gelenke 13 und 16 der unteren Querlenker 7 und 8 in einer Längsebene liegen. Bei einer bestimmten Einfederungsgeschwindigkeit des Radträgers 3 erhält das äussere Gelenk 16 des hinteren Querlenkers 8 die Geschwindigkeit $v_1$. Abhängig vom Abstandsverhältnis des Gelenkes 11 vom Gelenk 16 erhält das Gelenk 11, an dem der Längsarm 5 am unteren hinteren Querlenker 8 angreift, die Geschwindigkeit $v_2$. Mit den Längenverhältnissen des Längsarms 5 (Abstand des Gelenks 11 vom Verbindungslager 9 im Verhältnis zur Gesamtlänge des Längsarms 5) erhält das Verbindungslager 9 die Geschwindigkeit $v_3$. In der Regel ist der vordere untere Querlenker 7 zum Erhalt einer guten Vorspurkurve über der Einfederungsbewegung kürzer als der hintere untere Querlenker 8, was bei dem aus der Skizze ersichtlichen Hebelarmverhältnis des vorderen unteren Querlenkers 7 (Abstand des Gelenks 13 vom Verbindungslager 9 im Verhältnis zur Gesamtlänge des Querlenkers 7) wiederum zu einer stärkeren Vergrösserung der Geschwindigkeit $v_4$ des äusseren Gelenks 13 führt, als dem Verhältnis der Geschwindigkeiten $v_1$ zu $v_2$ entspräche. Aus den Geschwindigkeiten $v_1$ und $v_4$ lässt sich ein «Längspol» 17 bestimmen, um den das Rad 1 momentan schwenkt. Dieser Längspol 17 liegt, wie man erkennt, höher und deutlich weiter vorne als das reale Gelenk 12, mit dem der Längsarm 5 an der Karosse gelagert ist. Die Lage des Längspols 17 lässt sich in weiten Grenzen durch richtige Auswahl der eben beschriebenen Hebelarmverhältnisse festlegen. Trotzdem können die übrigen Achsbauteile ohne die sonst häufig erforderlichen Kompromisse hinsichtlich der Achskinematik optimiert werden. So ist es z.B. möglich, die Längen der unteren Querlenker 7, 8 so festzulegen, dass eine möglichst günstige Vorspurkurve über dem Einfederungsweg erreicht wird. Auch können diese beiden unteren Lenker in Draufsicht – wie etwa in Fig. 4 erkennbar – etwas gepfeilt werden, um für das Längsfedern einen ausserhalb der Radmittenebene 18 liegenden Momentanpol zu erhalten. Dieser Momentanpol kann ferner, wie bekannt, auch in Draufsicht hinter der Radachse liegen, was zu einem günstigen Vorspurverhalten bei Seitenkräften beiträgt.

In Fig. 6 ist eine mögliche Ausführungsvariante des Längsarms 5 näher dargestellt, der im wesentlichen aus zwei Blechschalenteilen zusammengesetzt ist und an seinen Enden mit entsprechend ausgebildeten Anschlussstücken verschweisst ist. Die im vorderen Gelenk 12 verwendete Gummibuchse 19 ist verhältnismässig grossvolumig, denn sie soll zum Erhalt einer guten Längsfederung der gesamten Radaufhängung, die aus Komfortgründen wichtig ist, Längsstösse möglichst weich aufnehmen, die nahezu allein über den Längsarm 5 in den Fahrzeugaufbau 4 eingeleitet werden.

Fig. 6 und insbesondere Fig. 7 zeigen eine Möglichkeit, wie ein Verbindungslager 9 mit dem weiter oben bereits beschriebenen Eigenschaften realisiert werden könnten. Es sind verhältnismässig grossflächige Gummidruckplatten 20 verwendet, die senkrecht zur harten Belastungsrichtung B angeordnet sind. In die Gummidruckplatten 20 sind ferner steife Zwischenplatten 21 eingebettet. Der im Querschnitt weitgehend U-förmige vordere untere Querlenker 7 ist beiderseits seines Steges mit den geschilderten Gummidruckplatten 20 versehen, gegen deren obere die untere Wandung 22 des Längsarms 5 und gegen deren untere eine Gegenspannplatte 23 gedrückt ist, die unter Zwischenschaltung einer Distanzbuchse 24 gegen die Wandung 22 gespannt ist. Das Verbindungslager 9 in der geschilderten Anordnung und Ausbildung kann hohe Kräfte in der harten Belastungsrichtung B aufnehmen, denen nur ganz geringe elastische Relativbewegungen des Längsarms 5 zum Querlenker 7 in der harten, annähernd vertikalen Belastungsrichtung B zugeordnet sind. Andererseits gestattet dieses Verbindungslager ein ausreichendes Relativverschieben des Längsarms 5 zum unteren Querlenker 7 in der annähernd horizontalen weichen Belastungsrichtung W, ohne dass hierzu grössere Verformungskräfte aufzubringen wären.

Bei dem Ausführungsbeispiel nach den Fig. 8 und 9 sind die beiden unteren Querlenker 7 und 8 nicht direkt am Fahrzeugaufbau 4, sondern an einem elastisch mit dem Fahrzeugaufbau 4 verbundenen Hilfsrahmen 24 angelenkt, an dem auch – wie in Fig. 8 lediglich angedeutet – der obere Querlenker 6 gelenkig angreift. Die elastische Verbindung des Hilfsrahmens 24 mit dem Fahrzeugaufbau 4 erfolgt in bekannter Weise über Gummibuchsen 25, deren Achsen in Fig. 4 senkrecht verlaufen, die aber auch schräg gestellt sein können. Der Hilfsrahmen 24 könnte auch das Hinterachsgetriebe, die Tragfedern, die Dämpfer und auch den Stabilisator aufnehmen. Der Längsarm 5 ist dagegen nach wie vor mit der durch die Gummibuchse 19 gegebenen Längselastizität direkt an den Fahrzeugaufbau angelenkt.

In Fig. 9 ist – zur Verdeutlichung übertrieben dargestellt – die durch die Pfeilung der unteren Querlenker 7 und 8 in Verbindung mit der nachgiebigen Anlenkung des Längsarms 5 beim Bremsen sich ergebende Radstellungsänderung in Richtung Vorspur in strichlierten Linien verdeutlicht. Die schon erwähnte Pfeilung α führt zunächst unter dem Einfluss der Bremskraft B1 wie gewünscht zu dem Vorspurwinkel λ. Die zumindest in annähernd der gleichen Grösse auf das Gelenk 16 des hinteren unteren Querlenkers 8 übertragene Kraft B2 aus der Bremskraft B1 führt zu einer nach vorne gerichteten Reaktionskraft R am inneren Gelenk 26 des hinteren unteren Querlenkers 8. Die Reaktionskraft R führt schliesslich wiederum zu einer Verlagerung des elastisch aufgehängten Hilfsrahmens 24 nach vorne, was den Effekt des Invorspurgehens des Rades 1 noch verstärkt. Werden auf die Radaufhängung Antriebskräfte ausgeübt, so erfolgt die Verlagerung, wie gewünscht, in der umgekehrten Richtung.

Bei einseitigem Bremsen oder bei einseitig wirkender Antriebskraft kommt sinngemäss eine zusätzliche Schrägstellung des elastisch gelagerten Hilfsrahmens 24 hinzu, und zwar ebenfalls in der gewünschten Drehrichtung.

Auch bei Seitenkräften kann je nach Auslegung der elastischen Aufhängung des Hilfsrahmens 24 am Fahrzeugaufbau 4 der Hilfsrahmen 24 sich parallel oder im Sinn von «untersteuernd» verschieben, je nach dem, welches Fahrverhalten angestrebt wird.

In den Fig. 10 bis 12 ist eine Ausführungsform beschrieben, die sich dann empfiehlt, wenn die horizontalen Abstände der Gelenke 11 und 16 (Fig. 1) oder der Gelenke 15 und 16 (Fig. 2) möglichst klein werden sollen, was wegen der Mindestgrösse der Gelenkbuchsen und der sie umgebenden Gelenkaugen gewisse Grenzen hat. Wie man insbesondere in Fig. 10 erkennt, ist der Längsarm 5' über eine Gummibuchse 27 mit dem Radträger 3' verbunden. Das Gelenk, mit dem der hintere untere Querlenker 8" an dem Radträger 3' angelenkt ist, hat eine Gelenkachse 28, die konzentrisch zu derjenigen ist, mit der der Längsarm 5' am Radträger 3' angelenkt ist. Dabei ist das Gelenkauge 29, das die innen mit dem Radträger 3' verbundene Gummigelenkbuchse 27 aufnimmt, aussen von einer weiteren Gummigelenkbuchse 30 umgeben, die schliesslich von dem Gelenkauge 31 des Querlenkers 8" umschlossen ist. Der die Tragfeder 32 und den Stossdämpfer 33 abstützende untere hintere Querlenker 8" ist bei dem in den Fig. 10 bis 12 dargestellten Ausführungsbeispiel mit einem nach oben offenen U-Querschnitt ausgebildet. Die Fig. 13 und 14 zeigen eine weitere Variante, mit der die Gelenkverbindung des unteren hinteren Querlenkers 8''' mit dem Längsarm 5" und dessen Gelenkverbindung mit dem Radträger 3' horizontal eng angenähert werden kann. Dabei ist das hintere Ende des Längsarmes 5" über ein Gummigelenk 34 mit dem Radträger 3' und der hintere untere Querlenker 8''' mit dem Ende des Längsarmes 5" über zwei – in einer Ansicht von hinten – voneinander im Abstand übereinander angeordnete weitere Gummilager 35 und 36 verbunden. Die Verbindung Querlenker 8''' zu Längsarm 5" ist auf diese Weise um eine Längsachse relativ knicksteif, horizontal um eine Hochachse jedoch begrenzt (in dem erforderlichen Umfang) biegeweich.

Bei dem Ausführungsbeispiel nach den Fig. 15 und 16 ist der Längsarm 39 und der hintere untere Querlenker 38 als ein gemeinsames Bauteil ausgebildet. Auf diese Weise sind weniger einzelne Teile erforderlich, es müssen jedoch andere Anforderungen erfüllt werden, da der starre Lenkerverband beim Einfedern schwenkt. So müssen sehr sorgfältig die Anstellwinkel der Lageraugen dieses Verbundlenkers ausgewählt werden, um die Querweichheit des hinteren inneren Lagers nicht zu gross wählen zu müssen.

Das Ausführungsbeispiel nach den Fig. 17 bis 19 stellt in dieser Hinsicht weniger Anforderungen, da der mit dem Längsarm 39' verbundene Querlenker 38' um eine Hochachse biegeweich ist. Dies wird, wie auch in Fig. 18 ersichtlich wird, durch einen Querlenker 38' erreicht, der im wesentlichen durch ein hochkantstehendes Metallblatt gebildet ist.

Das Ausführungsbeispiel nach den Fig. 20 bis 23 sieht ebenfalls einem um eine Hochachse biegeweichen Querlenker 38'' vor – ebenfalls als hochkantstehendes Metallblatt – der jedoch an seinem radträgerseitigen Endbereich an das hintere Ende des Längsarmes 39'' angeschraubt ist. Ein solcher Lenkerverband lässt sich einerseits leichter aus einfach zu fertigenden Einzelteilen herstellen, andererseits kann an der belastungsmässig kritischen Übergangsstelle vom Querlenker 38'' zum Längsarm 39'' auf Schweissnähte verzichtet werden.

Bei der Ausführungsform nach den Fig. 24 bis 26 sind sowohl der obere Querlenker 6 als oberes Radführungselement als auch die beiden unteren Querlenker 38''' und 7'' als gerade Lenker mit einem einfach zu fertigenden U-Profilquerschnitt ausgebildet. Das Gelenk 37, mit dem der Längsarm 39''' am Radträger 2' angelenkt ist, kann bei dieser Ausführungsform relativ tief liegen, was den Anfahr-Nickausgleich begünstigt. Der darüber am Radträger 3'' angelenkte hintere untere Querlenker 38''' kann vergleichsweise hoch liegen, was eine günstige Rollzentrumshöhe ermöglicht und andererseits – wegen des höher liegenden fahrgestellseitigen Querlenkergelenks 40 – trotzdem eine gute Bodenfreiheit gewährleistet.

Die Fig. 27 veranschaulicht schliesslich noch eine weitere Ausführungsform zur Verwirklichung des erfindunsgemässen Prinzips. Der Längsarm 39'''' und die beiden unteren Querlenker 38'''' und 7''' sind dabei als gemeinsames Bauteil ausgeführt. Dieses Bauteil kann aus Faser-Verbund-Werkstoff hergestellt sein, jedoch ist auch eine Metall-Schweisskonstruktion denkbar. Dabei ist zweckmässig einer der Querlenker 7''' oder 38'''' – bei der dargestellten Ausführungsform der hintere untere Querlenker 38'''' – um eine Hochachse biegesteif ausgebildet. Querverlagerungen des Kreuzungspunktes 41 sind dabei durch die Biegeweichheit des Längsarmes 39'''' um eine Hochachse, Längsverlagerungen dieses Kreuzungspunktes durch die Biegeweichheit des vorderen unteren Querlenkers 7''' möglich. In annähernd vertikaler Richtung sind jedoch auch bei dieser Ausführungsform Relativbewegungen zwischen dem Längsarm 39'''' und dem vorderen unteren Querlenker 7''' nicht möglich, so dass die anhand der Fig. 1 beschriebene Kinematik zum Erhalt des Längspols 17 möglich ist.

## Patentansprüche

1. Hinterradaufhängung für Kraftfahrzeuge, insbesondere für angetriebene Hinterräder, mit einem das Rad lagernden Radträger, der mit dem Fahrzeugaufbau oder dergleichen über einen im wesentlichen in Fahrzeuglängsrichtung verlaufenden Längsarm (5), ein oberes Radführungselement (6) (Querlenker, Federbein) sowie zwei untere Querlenker (7, 8) verbunden ist, dadurch gekennzeichnet, dass der Längsarm (5, 5', 5'', 39, 39', 39'') unmittelbar oder mittelbar gelenkig mit dem Radträger (3, 3', 3'') verbunden ist, wobei der Längsarm an einem der beiden unteren Lenker (7, 7', 7''', 8, 8', 8'', 38, 38', 38'') zwischen dessen beiden Enden über ein Verbindungslager (9, 9') abgestützt ist, das diesen Lenker mit dem Längsarm etwa in vertikaler Richtung koppelt, etwa horizontale Relativbewegungen zwischen dem Lenker und dem Längsarm jedoch zulässt.

2. Hinterradaufhängung nach Anspruch 1, dadurch gekennzeichnet, dass der Längsarm (5, 5', 5'', 39, 39', 39'') vom Radträger (3, 3') nach vorne gerichtet ist.

3. Hinterradaufhängung nach Anspruch 1 oder 2, dadurch gekennzeichnet, dass das Verbindungslager (9, 9') am vorderen unteren Querlenker (7, 7', 7'') vorgesehen ist.

4. Hinterradaufhängung nach Anspruch 3, dadurch gekennzeichnet, dass der Längsarm (5, 5', 5'', 5''', 39'') mit seinem hinteren Ende am Radträger (3', 3'') angelenkt ist.

5. Hinterradaufhängung nach Anspruch 3, dadurch gekennzeichnet, dass der Längsarm (5) mit seinem hinteren Ende am hinteren unteren Querlenker (8) angelenkt ist.

6. Hinterradaufhängung nach Anspruch 5, dadurch gekennzeichnet, dass das am vorderen Querlenker (7, 7') vorgesehene Verbindungslager (9, 9') für die etwa vertikale Abstützung des Längsarms (5, 5') näher zur Mitte des vorderen Querlenkers (7, 7') versetzt ist als der Anlenkpunkt (Gelenk 11) des hinteren Endes des Längsarms (5, 5') zur Mitte des hinteren Querlenkers (8, 8'').

7. Hinterradaufhängung nach Anspruch 1, dadurch gekennzeichnet, dass das den Längsarm (5) mit einem der unteren Lenker (7) vertikal koppelnde Verbindungslager (9, 9') grossflächige Gummidruckplatten (20) umfasst, die senkrecht zur harten Belastungsrichtung (B) angeordnet sind.

8. Hinterradaufhängung nach Anspruch 7, dadurch gekennzeichnet, dass in die Gummmidruckplatten (20) steife Zwischenplatten (21) eingebettet sind.

9. Hinterradaufhängung nach Anspruch 1, dadurch gekennzeichnet, dass die beiden unteren Querlenker (7, 8) an einem elastisch mit dem Fahrzeugaufbau (4) verbundenen Hilfsrahmen (24) angelenkt sind.

10. Hinterradaufhängung nach Anspruch 4, dadurch gekennzeichnet, dass der Längsarm (5') und der hintere Querlenker (8'') an dem Radträger (3') angelenkt sind.

11. Hinterradaufhängung nach Anspruch 10, dadurch gekennzeichnet, dass das Gelenkauge (29) des Längsarms (5'), das die mit dem Radträger (3') verbundene Gummigelenkbuchse (27) aufnimmt, aussen eine weitere Gummigelenkbuchse (30) aufnimmt, die vom Gelenkauge (31) des unteren Querlenkers (8") umschlossen ist.

12. Hinterradaufhängung nach Anspruch 4, dadurch gekennzeichnet, dass das hintere Ende des Längsarmes (5") über ein Gummigelenk (34) mit dem Radträger (3') und der hintere Querlenker (8''') mit dem Ende des Längsarmes (5") über zwei – in einer Ansicht von hinten – voneinander im Abstand angeordnete weitere Gummilager (35, 36) verbunden sind.

13. Hinterradaufhängung nach Anspruch 3, dadurch gekennzeichnet, dass der Längsarm (39, 39') und der hintere untere Querlenker (38, 38') als ein Bauteil ausgebildet sind.

14. Hinterradaufhängung nach Anspruch 13, dadurch gekennzeichnet, dass der mit dem Längsarm (39', 39") verbundene Querlenker (38', 38") um eine Hochachse biegeweich ist.

15. Hinterradaufhängung nach Anspruch 14, dadurch gekennzeichnet, dass der Querlenker (38") im wesentlichen durch ein hochkant stehendes Metallblatt gebildet ist, an dessen radträgerseitigen Endbereich das hintere Ende des Längsarmes (39") angeschraubt ist.

16. Hinterradaufhängung nach Anspruch 1 mit einem oberen Querlenker (6) als oberes Radführungselement, dadurch gekennzeichnet, dass die Querlenker (6, 7", 38''') gerade Lenker mit einem U-Profil-Querschnitt sind.

17. Hinterradaufhängung nach Anspruch 1, dadurch gekennzeichnet, dass der Längsarm (39'''') und die beiden unteren Querlenker (38'''', 7''') als gemeinsames Bauteil ausgeführt sind.

18. Hinterradaufhängung nach Anspruch 17, dadurch gekennzeichnet, dass das gemeinsame Bauteil aus Faser-Verbund Werkstoff hergestellt ist.

19. Hinterradaufhängung nach Anspruch 17 oder 18, dadurch gekennzeichnet, dass wenigstens einer der Querlenker (7''', 38'''') um eine Hochachse biegesteif ausgebildet ist.

**Claims**

1. A rear wheel suspension for motor vehicles, especially for driven rear wheels, having a wheel carrier carrying the wheel and connected with the vehicle body or the like by a longitudinal arm (5) extending substantially in the longitudinal direction of the vehicle, an upper wheel guide element (6) (transverse link, shock-absorber – spring unit) and two lower transverse links (7, 8), characterised in that the longitudinal arm (5, 5', 5", 39, 39', 39") is connected directly or indirectly articulatedly with the wheel carrier (3, 3', 3"), while the longitudinal arm is supported on one of the two lower links (7, 7', 7''', 8, 8', 8", 38, 38', 38") between its two ends through a connecting bearing (9, 9'), which couples this link with the longitudinal arm approximately in the vertical direction but permits approximately horizontal relative movements between the link and the longitudinal arm.

2. A rear wheel suspension according to Claim 1, characterised in that the longitudinal arm (5, 5', 5", 39, 39', 39") is directed forward from the wheel carrier (3, 3').

3. A rear wheel suspension according to Claim 1 or 2, characterised in that the connecting bearing (9, 9') is provided on the forward lower transverse link (7, 7', 7").

4. A rear wheel suspension according to Claim 3, characterised in that the longitudinal arm (5, 5', 5", 5''', 39") is articulated with its rear end to the wheel carrier (3', 3").

5. A rear wheel suspension according to Claim 3, characterised in that the longitudinal arm (5) is articulated with its rear and to the rear lower transverse link (8).

6. A rear wheel suspension according to Claim 5, characterised in that the connecting bearing (9, 9') provided on the forward transverse link (7, 7') for the approximately vertical supporting of the longitudinal arm (5, 5') is offset nearer to the middle of the forward transverse link (7, 7') than the articulation point (joint 11) of the rear end of the longitudinal arm (5, 5') to the middle of the rear transverse link (8, 8").

7. A rear wheel suspension according to Claim 1, characterised in that the connecting bearing (9, 9') which vertically couples the longitudinal arm (5) with one of the lower links (7) comprises rubber pressure plates (20) of large area which are arranged perpendicularly to the hard loading direction (B).

8. A rear wheel suspension according to Claim 7, characterised in that rigid intermediate plates (21) are embedded into the rubber pressure plates (20).

9. A rear wheel suspension according to Claim 1, characterised in that the two lower transverse links (7, 8) are articulated to an auxiliairy frame (24) connected elastically with the vehicle body (4).

10. A rear wheel suspension according to Claim 4, characterised in that the longitudinal arm (5') and the rear transverse link (8") are articulated to the wheel carrier (3').

11. A rear wheel suspension according to Claim 10, characterised in that the joint eye (29) of the longitudinal arm (5'), which receives the rubber joint bush (27) connected with the wheel carrier (3'), externally accommodates a further rubber joint bush (30) which is enclosed by the joint eye (31) of the lower transverse link (8").

12. A rear wheel suspension according to Claim 4, characterised in that the rear end of the longitudinal arm (5") is connected through a rubber joint (34) with the wheel carrier (3') and the rear transverse link (8''') is connected with the end of the longitudinal arm (5") through two further rubber bearings (35, 36) which are arranged with spacing from one another – in a view from behind.

13. A rear wheel suspension according to Claim 3, characterised in that the longitudinal arm (39, 39') and the rear lower transverse link (38, 38') are made as one component.

14. A rear wheel suspension according to Claim 13, characterised in that the transverse link (38′, 38″) connected with the longitudinal arm (39′, 39″) is flexurally soft about an upright axis.

15. A rear wheel suspension according to Claim 14, characterised in that the transverse link (38″) is formed essentially by a metal sheet standing on edge, to the wheel-carrier end zone of which the rear end of the longitudinal arm (39″) is screwed.

16. A rear wheel suspension according to Claim 1, having an upper transverse link (6) as an upper wheel guide element, characterised in that the transverse links (6, 7″, 38‴) are straight links with a U-profiled cross-section.

17. A rear wheel suspension according to Claim 1, characterised in that the longitudinal arm (39⁗) and the two lower transverse links (38⁗, 7‴) are made as one common component.

18. A rear wheel suspension according to Claim 17, characterised in that the common component is produced from composite fibre material.

19. A rear wheel suspension according to Claim 17 or 18, characterised in that at least one of the transverse links (7‴, 38⁗) is made flexurally rigid about an upright axis.

**Revendications**

1. Suspension de roue arrière pour véhicule automobile, en particulier pour roues arrière motrices, comportant un support de roue portant la roue, qui est relié au châssis du véhicule ou analogue par un longeron (5) s'étendant dans le sens de la marche, un élément supérieur de guidage de roue (6) (bras transversal, jambe de ressort) ainsi que deux bras transversaux inférieurs (7, 8), caractérisée en ce que le longeron (5, 5′, 5″, 39, 39′, 39″) est relié directement ou indirectement de façon articulée avec le support de roue (3, 3′, 3″), où le longeron s'appuie sur les deux bras transversaux inférieurs (7, 7′, 7‴, 8, 8′, 8″, 38, 38′, 38″) entre des deux extrémités par un palier de raccordement (9, 9′) qui accouple ce bras transversal au longeron dans une direction à peu près verticale, des déplacements relatifs à peu horizontaux pouvant cependant avoir lieu entre le bras transversal et le longeron.

2. Suspension de roue arrière selon la revendication 1, caractérisée en ce que le longeron (5, 5′, 5″, 39, 39′, 39″) est dirigé vers l'avant à partir du support de roue (3, 3′).

3. Suspension de roue arrière selon la revendication 1 ou 2, caractérisée en ce que le palier de raccordement (9, 9′) est prévu sur le bras transversal inférieur (7, 7′, 7″).

4. Suspension de roue arrière selon la revendication 3, caractérisée en ce que le longeron (5, 5′, 5″, 5‴, 39″) s'articule par son extrémité arrière sur le support de roue (3, 3″).

5. Suspension de roue arrière selon la revendication 3, caractérisée en ce que le longeron (5) s'articule par son extrémité arrière sur le bras transversal inférieur arrière (8).

6. Suspension de roue arrière selon la revendication 5, caractérisée en ce que le palier de raccordement (9, 9′) prévu sur le bras transversal avant (7, 7′) pour l'appui sensiblement vertical du longeron (5, 5′) est placé vers le milieu du bras transversal avant (7, 7′) de façon à en être plus proche du point d'articulation (articulation 11) de l'extrémité arrière du longeron (5, 5′) que du milieu du bras transversal arrière (8, 8″).

7. Suspension de roue arrière selon la revendication 1, caractérisée en ce que le palier de raccordement (9, 9′) s'accouplant verticalement avec le longeron (5) au moyen du bras transversal inférieur (7) comporte des plaques de caoutchouc à grande surface qui sont placées perpendiculairement pour durcir dans le sens de la charge (B).

8. Suspension de roue arrière selon la revendication 7, caractérisée en ce que des plaques intermédiaires rigides (21) sont noyées dans des plaques de caoutchouc (20).

9. Suspension de roue arrière selon la revendication 1, caractérisée en ce que les deux bras transverseaux inférieurs (7, 8) sont articulés sur un cadre auxiliaire (24) relié élastiquement au châssis du véhicule (4).

10. Suspension de roue arrière selon la revendication 4, caractérisée en ce que le longeron (5′) et le bras transversal arrière (8″) sont articulés sur le support de roue (3′).

11. Suspension de roue arrière selon la revendication 10, caractérisée en ce que l'œil d'articulation (29) du longeron (5′) qui reçoit le manchon d'articulation en caoutchouc (27) relié au support de roue (3′) est entouré en outre par un autre manchon d'articulation en caoutchouc (30) qui est entouré par l'œil d'articulation (31) du bras transversal inférieur (8″).

12. Suspension de roue arrière selon la revendication 4, caractérisée en ce que l'extrémité arrière du longeron (5″) est reliée par une articulation en caoutchouc (34) du support de roue (3′) et le bras transversal arrière (8‴) est relié à l'extrémité du longeron (5″) par deux paliers de caoutchouc qui – vu de l'arrière – sont espacés des autres paliers de caoutchouc (35, 36).

13. Suspension de roue arrière selon la revendication 3, caractérisée en ce que le longeron (39, 39′) et le bras transversal inférieur arrière (38, 38′) sont formés d'une seule pièce.

14. Suspension de roue arrière selon la revendication 13, caractérisée en ce que le bras transversal (38′, 38″) lié au longeron (39′, 39″) est souplement coudé autour d'un axe vertical.

15. Suspension de roue arrière selon la revendication 14, caractérisée en ce que le bras transversal (38″) est formé pour l'essentiel d'une feuille de métal placée sur chant sur la zone d'extrémité côté roue de laquelle se visse l'extrémité arrière du longeron (39″).

16. Suspension de roue arrière selon la revendication 1 comprenant un bras transversal supérieur (6) comme élément supérieur de guidage de roue, caractérisée en ce que les bras transversaux (6, 7", 38''') sont des bras transversaux droits avec une section de profil en U.

17. Suspension de roue arrière selon la revendication 1, caractérisée en ce que le longeron (39'''') et les deux bras transversaux inférieurs (38'''' et 7''') sont réalisés sous forme d'une même pièce.

18. Suspension de roue arrière selon la revendication 17, caractérisée en ce que la pièce commune est réalisée en matériau composite à base de fibres.

19. Suspension de roue arrière selon la revendication 17 ou 18, caractérisée en ce qu'au moins un des bras transversaux (7''', 38'''') est coudé rigidement autour d'un axe vertical.

FIG.1

FIG.2

FIG.3

FIG.5

FIG.7

FIG.4

FIG.6

EP 0 193 089 B1

FIG.8.

FIG.9

FIG.14

FIG.12

FIG.11

FIG.10

FIG.13

FIG.16

FIG.15

FIG.19

FIG.18

FIG.17

XVI          XVI

IXX          IXX

39

39'

38

38'

XVIII

XVIII

38'

39'

EP 0 193 089 B1

38"   FIG.21

FIG.23

39"

FIG.20

39"

XXIII        XXIII

39"

XXII        XXII        38"

FIG.22

33

XXI

FIG. 26

FIG. 24

FIG. 25

EP 0 193 089 B1

# FIG. 27

41

39''''

7''''

38''''